# NOUVEAU FASCICULE DE BREVET EUROPEEN

(11) **EP 0 240 607 B2**
(45) Date de publication et mention de la décision concernant l'opposition: **17.04.1996**
(45) Mention de la délivrance du brevet: 22.11.1990
(21) Numéro de dépôt: 86117206.2
(22) Date de dépôt: 10.12.1986
(51) Int. Cl.: A23C 19/032, A23C 19/16

(54) **Procédé de fabrication de fromages**
Käseherstellungsverfahren
Process for making cheese

(30) Priorité: 30.12.1985 FR 8519400
(43) Date de publication de la demande: 14.10.1987
(73) Titulaire: SOCIETE DES PRODUITS NESTLE S.A., CH-1800 Vevey (CH)
(72) Inventeur: Ingouf, Jean-Claude, F-50 000 Saint-Lo (FR); Parmantier, Claude, F-50 880 Pont-Hebert (FR); Verney, Alain, F-50 000 Saint-Lo (FR)

(56) Documents cités:
- FR-A- 1 413 207
- US-A- 2 494 636
- FOOD SCIENCE & TECHNOLOGY ABSTRACTS, résumé no. 84-03-P0798 (84017496) 1984; E. NEVIANI et al.: "Role of enterococci in Italian cheeses. I. Presence in alpine cheeses and use in a selected starter", & LATTE, vol. 7, no. 10, pages 722-728,1982
- JOURNAL OF DAIRY SCIENCE, vol. 31, 1948, page 716, no. M34; R. TITTSLER et al.: "The influence of various lactobacilli and certain streptococci on the chemical changes, flavor development and quality of cheddar cheese"
- FOOD SCIENCE & TECHNOLOGY ABSTRACTS, résumé no. 75-05-P0957 (75025692), 1975; M. VEAUX et al.: "Development of lactic acid bacteria and propionic acid bacteria during manufacture and ripening of gruyere cheese", & XIX International Dairy Congress, 1E, 420, 1974
- SCHWEIZ. MILCHW. FORSCHUNG, no. 12, pages 50-54, 1983; R. MARET et al.: "Etude d'un défaut affectant les parois des ouvertures propioniques d'Emmenthals industriels
- FOOD SCIENCE & TECHNOLOGY ABSTRACTS, résumé no. 78-12-P2611 (78065312) 1976; J. SAUVAGE: "Beaufort cheese"
- Bergey's Manual of Determinative Bactericology, 8th Edition, Part 16, p. 576-578 et 586-587
- Handbuch der Käse, Heinrich-Waldburg, Kempten, 1974, p. 648-653
- Molkereitechnik, Grundriss der pratktischen Mikrobiologie für das Molkereifach, Michael Teuber, Band 59/60, p. 94-99
- Cheese and fermented milk foods, Frank Kosikowski, 2nd edition, p. 16 and 213
- Irish Journal of Food Science Technologie, 7, p. 27-38, 1983
- Report of the 20th InternationalDairy Congress, 1978, Paris, p. 530-531
- Le fromage, André Eck, Technique et Documentation, 1984, p. 176-177, 22, 241, 259-260, 264 et 277-279 et lettre du 18.10.89

## Description

La présente invention a pour objet un procédé de fabrication de fromages à pâte pressée à ouverture.

Les fromages à pâte pressée cuite ou non cuite ne présentent pas d'ouverture dans la pâte dès que leurs dimensions sont moyennes, par exemple dans le cas des meules, leur diamètre n'excède pas 350 mm et leur hauteur 150 mm cependant que leur poids ne dépasse pas une dizaine de kg. On peut citer comme exemple le Saint-Paulin, le Gouda, l'Edam ou le Cantal.

On trouve dans le commerce des fromages à pâte pressée à ouverture régulière et développée, du type de l'Emmental, mais seulement sous forme de meules de grandes dimensions, par exemple de 700 à 1000 mm de diamètre et de 130 à 250 mm de hauteur, pesant de l'ordre de 60 à 130 kg. Dans l'Emmental, l'ouverture de la pâte est provoquée par une fermentation propionique régulièrement développée: les bactéries propioniques forment de l'acide propionique et de l'acide acétique ainsi que du gaz carbonique, lequel se dissout dans l'eau de la pâte jusqu'à saturation et, lorsque celle-ci est atteinte, apparaissent à certains endroits des bulles de gaz provoquant des trous dans la pâte. La fermentation propionique a lieu surtout en anaérobiose et à distance de la croûte.

Il serait souhaitable de mettre à disposition des consommateurs un fromage à pâte pressée de dimensions moyennes à faibles qui aurait des caractéristiques organoleptiques et d'ouverture de la pâte voisines de celles de l'Emmental, soit un "mini-Emmental". On voit sans peine quels avantages présenterait un tel fromage sur le plan des coûts de fabrication et de distribution en plus de l'attrait de la nouveauté.

Dans ce but, des essais ont été entrepris dans plusieurs directions:
Les modifications d'ordre technologique portant sur les conditions de pasteurisation du lait, la quantité de présure employée, l'ampleur du délactosage et la température de pressage n'ont pas permis de pallier le manque d'ouverture.

Les variations d'ordre microbiologique telles que l'augmentation des quantités et de la sélectivité des bactéries propioniques ou l'utilisation d'autres microorganismes comme par exemple les levures n'ont pas non plus abouti.

Enfin, l'enrobage des fromages avec un film de matière plastique thermoformé sur 90% de leur surface dans le but de retenir les gaz, un bouchon de cire couvrant les 10% restants afin de servir de soupape en cas d'augmentation de volume, n'a produit que des fromages dont la pâte était ouverte mais qui étaient complètement déformés après 25 jours d'affinage.

Food Science and Technology Abstracts, résumé 84-03-P0798, se rapporte à l'étude des entérocoques du genre Streptococcus et de certains Lactobacilli provenant de la microflore de fromage italiens alpins. Il est mentionné qu'un starter mixte combinant 7 souches entérocoques du genre Streptococcus et 3 souches de l'espèce Lactobacillus fermenti peut être utilisé pour la production standardisée de fromages italiens alpins. Il n'y a pas d'indication relative à la production d'ouverture dans les fromages.

Journal of Dairy Science, Vol. 31, p. 716, 1948 étudie l'influence de certains microorganismes, Lactobacilli e Streptococci sur les modifications chimiques, le développement d'arôme et la qualité du Cheddar dans le but d'acélérer la maturation et d'améliorer la qualité du Cheddar. Dans ces expériences, les microorganismes sont ajoutés à un starter lactique classique et les Cheddar sont comparés à ceux obtenus au moyen du seul starter lactique. Parmi les microorganismes étudiés, certains n'ont pas d'influence, d'autres accélèrent la maturation mais produisent des saveurs indésirables. Il est indiqué que Lactobacilli fermenti produisent du gaz et une saveur tout à fait inacceptable. Par contre, certaines souches de Lactobacillus plantarum accéléreraient le développement d'une saveur souhaitable et sont recommandés comme accélérateur de maturation.

Nous avons trouvé de manière surprenante que l'addition de lactobacillus de l'espèce Lactobacillus fermentum au lait avant l'emprésurage permet de résoudre les difficultés exposées précédemment en mettant à disposition des fromages à pâte pressée de dimensions faibles à moyennes présentant des qualités organoleptiques et une ouverture de la pâte, sans déformation, proches de celles de l'Emmental.

L'invention concerne donc un procédé de fabrication de fromages à pâte pressée à ouverture, ayant des caractéristiques organoleptiques et d'ouverture de la pâte du type de celles de l'Emmental et de dimensions moyennes à faibles dans lequel on pasteurise du lait standardisé en matière grasse lactique, on l'ensemence avec des ferments lactiques et de la présure pour produire un caillé et de sérum, on découpe le caillé en grains, on soutire une partie du sérum et on lave les grains de caillé, on les chauffe, on les met dans des moules et on les presse dans les moules, puis on démoule les fromages, on les sale et on les affine, caractérisé par le fait que l'on ajoute au lait avant l'emprésurage 5.10⁴ à 10⁷ de lactobacilles de l'espèce Lactobacillus fermentum par ml de lait pour réaliser l'ouverture de la pâte.

Dans le présent exposé, le terme 〈〈lactobacilles〉〉 s'applique à l'espèce Lactobacillus fermentum. Pour mettre en oeuvre le procédé selon l'invention, on part de lait standardisé en matières grasses, par exemple par adjonction de crème, de manière à obtenir une concentration pondérale de 40 à 55%, de préférence environ 50% de matières grasses sur matières sèches.

On pasteurise ensuite le lait par exemple à 63°C-90°C pendant quelques secondes à 30 min. On peut, en variante, réaliser une bactofugation du lait, c'est-à-dire qu'on en élimine les bactéries par centrifugation à la température de pasteurisation.

Dans l'opération suivante, on ensemence le lait avec des ferments lactiques courants, de préférence à raison d'environ 1% en poids. C'est à ce stade qu'on ajoute des lactobacilles de l'espèce Lactobacillus fermentum.

Ceux-ci sont thermophiles et hétérofermentaires mais, à la différence des bactéries propioniques, iles peuvent croître en anaérobiose comme en aérobiose, c'est-à-dire qu'ils sont moins exigeants quant aux conditions d'anaérobiose. On peut les cultiver sur un milieu MRS-Bouillon® (MERCK) ou avantageusement sur un perméat d'ultrafiltration de lait, de préférence supplémenté en oligo-éléments et extrait de levure, à une température d'environ 30°C et en atmosphère anaérobie stricte (GASPAK®, mélange H₂+CO₂ assurant des conditions d'anaérobie). On peut les conserver par lyophilisation et les entreposer de préférence à environ 4°C.

Produisant du gaz carbonique, ils aident à saturer en ce gaz la partie aqueuse du fromage.

De préférence, les souches employées sont celles déposées dans la collection nationale de cultures de microorganismes (C.N.C.M.) de l'Institut Pasteur, à Paris sous les numéros C.N.C.M. I-459, C.N.C.M. I-460 et C.N.C.M. I-461.

On a constaté que ces lactobacilles ne présentent pas les défauts habituels des germes butyriques du genre Clostridium dus à la production d'hydrogène pouvant conduire à un gonflement anarchique de la pâte et à la formation d'acide butyrique responsable d'un goût très désagréable. Au contraire, la formation des trous est régulière et aucun défaut de goût n'est apporté pendant l'affinage.

Le taux d'ensemencement en cellules revivifiables efficace pour produire une ouverture régulière est en générale de 5 . 10⁴ à 10⁷ et de préférence 5 . 10⁴ à 10⁵ lactobacilles/ml de lait. Bien entendu, on peut moduler l'action des lactobacilles en faisant varier celui-ci. Par exemple, le lait d'ensilage ou lait d'hiver peut contenir une certaine quantité de lactobacilles tandis que le lait d'été n'en contient pas. Il sera donc préférable d'en ajouter une quantité plus grande au lait d'été. D'autre part, l'apparition de l'ouverture dépendra également de ce taux : elle se situe généralement entre 15 et 30 jours après la fabrication.

Dans un mode de réalisation préféré de l'ensemencement, on peut ajouter aux lactobacilles des germes propioniques à un taux de 5 . 10⁵ à 2 . 10⁴ et de préférence environ 10⁴ de cellules revivifiables/ml de lait. En effet, on pense que les lactobacilles renforcent l'anaérobiose dans le coeur du fromage et contribuent à un meilleur développement des germes propioniques. En jouant sur les proportions relatives des lactobacilles et des germes proprioniques, on peut fabriquer, plus ou moins rapidement, des fromages d'ouverture comparable mais à goût sucré plus ou moins prononcé.

On peut également ajouter à ce stade de la fabrication d'autres agents aromatisants ou colorants conférant à la pâte un goût ou une couleur recherchés.

Après l'ensemencement, on laisse l'acidification se produire, puis on coagule le lait maturé par addition de présure, on découpe le caillé en grains, on soutire une partie du sérum, on lave les grains de caillé à l'eau pour les délactoser, on les chauffe, on les met dans des moules et on les presse dans les moules, puis on démoule les fromages et on les sale, toutes ces opérations s'effectuant de manière conventionnelle et bien entendu adaptée au type de fromage que l'on désire fabriquer.

Selon un mode de réalisation préféré du procédé de l'invention, on peut fabriquer des fromages qui se présentent avantageusement sous forme de meules, de préférence de diamètre inférieur à 110 mm et de poids inférieur à 500 g. Pour ce faire, on enrobe le fromage d'un film plastique essentiellement imperméable aux gaz avant l'affinage, de manière à bloquer la plupart des gaz qui se forment dans la pâte pendant la période d'affinage. L'expression "essentiellement imperméable aux gaz" désigne un matériau capable d'éliminer la plupart des pertes en gaz carbonique et d'assurer une étancheité convenable à l'oxygène.

On peut utiliser un matériau thermoformable possédant une certaine extensibilité, c'est-à-dire capable de suivre l'évolution de la forme du fromage lors de l'ouverture de la pâte. On peut utiliser par exemple le polychlorure de vinyle (PVC), le polychlorure de vinylidène (PVDC), le polyéthylène (PE), le polypropylène (PP), le polyamide (PA) physiologiquement inertes. Ces matériaux peuvent se présenter sous forme de copolymères ou de complexes ou servir d'enduit plastifiant, par exemple d'un film cellulosique. De préférence, on utilise une colle plastique de qualité alimentaire appliquée par badigeonnage ou trempage.

Selon un mode de réalisation particulier, on peut fabriquer des fromages de dimensions encore plus petites, correspondant par exemple à un poids inférieur à 40 g. Dans ce cas, on peut avantageusement couvrir le produit d'une couche de paraffine et d'un film plastique tel qu'indiqué précédemment.

En variante des modes de réalisation préférés et particuliers précédents, on peut conduire l'affinage dans une enceinte où règne une surpression d'air ou de préférence de gaz carbonique, par exemple de 25-30 mb par rapport à la pression atmosphérique, de manière à rendre impossible les pertes de gaz formé dans la pâte. On peut également saturer l'ambiance en gaz carbonique de manière à favoriser la croissance des bactéries propioniques en améliorant l'anaérobiose.

Pour les fromages sans enrobage, on peut effectuer l'affinage d'une manière conventionnelle adaptée au type de fromage que l'on désire fabriquer.

Dans le cas des fromages enrobés, l'affinage a lieu en cave où règne de préférence une température d'environ 15°C et une humidité relative d'environ 90% jusqu'à la formation d'ouvertures, puis ensuite en cave froide, de préférence à environ 8°C, à environ 90% d'humidité relative en attendant la commercialisation.

Les exemples suivants illustrent l'invention. Dans ceux-ci, les parties et pourcentages sont pondéraux, sauf indication contraire.

### Exemple 1

On standardise du lait entier récolté en hiver le cas échéant avec de la matière grasse lactique sous forme de crème ou du lait écrémé de manière qu'il contienne 50% de matières grasses sur matières sèches. On pasteurise ensuite le lait à 72°C pendant 15 s., puis on le refroidit à 32°C et on le transfère dans une cuve.

On ensemence le lait pasteurisé et refroidi avec 1% de ferments lactiques mésophiles, 10⁴ germes propioniques (cellules revivifiables)/ml et 5 . 10⁴ Lactobacillus fermentum C.N.C.M.I-459 (cellules revivifiables)/ml. Après 15 min, le lait a un pH de 6,5 (17° Dornic). On ajuste sa température à 32°C et on y ajoute 40 ml de présure au 1/10000ème pour 101 l de lait. Au bout de 22 min, on découpe le caillé et on le brasse pour obtenir des morceaux de la taille d'un grain de maïs, le décaillage durant 20 min. On soutire ensuite une quantité de sérum correspondant à 50% du lait mis en oeuvre, puis on introduit de l'eau à raison de 20% du lait mis en oeuvre. On chauffe la dispersion progressivement de 32°C jusqu'à 37,5°C en brassant en 15 min, puis on maintient cette température pendant 3 min. On transfère ensuite les grains de caillé dans des moules en évitant tout trou de moulage dans la pâte par emprisonnement d'air ou formation d'ouverture mécanique et on les presse dans les moules en appliquant une pression augmentant progressivement de 20 mb jusqu'à 60 mb. On démoule alors les fromages et on les sale.

On les enrobe enfin avec une couche de colle plastique (FOODPLAST®) de 2 mm, puis on les affine dans une cave où règne une température de 8°C et une humidité relative de 90%. L'ouverture apparaît entre 20 et 30 jours. On les entrepose alors dans une cave où règne une température de 8°C et une humidité relative de 90% pendant 10 jours. Les fromages obtenus ont une ouverture régulière et un goût sucré caractéristique. Ils ont un diamètre de 105 mm et pèsent 450 g.

### Exemples 2-3

On procède comme à l'exemple 1 à partir de lait de récolte estivale avec les souches Lactobacillus fermentum C.N.C.M. I-460 (exemple 2) et C.N.C.M. I-461 (exemple 3) à raison de 10⁶ lactobacilles (cellules revivifiables) /ml. Les fromages obtenus ont un goût peu sucré et une ouverture régulière apparaissant après 15 à 20 jours d'affinage.

### Exemple 4

On procède comme à l'exemple 1 à partir de la souche Lactobacillus fermentum C.N.C.M. I-459 à raison de 10⁷ lactobacilles (cellules revivifiables)/ml, mais sans ajouter de germes propioniques. L'ouverture de la pâte apparaît après 15 jours d'affinage. Les produits finals présentent une ouverture régulière et un goût neutre.

### Exemples comparatifs

On a tenté de fabriquer un fromage à pâte pressée non cuite en meules de 105 mm de diamètre en employant une méthode de fabrication semblable à celle décrite dans l'exemple 1, mais sans introduire de lactobacilles.
1. A partir de lait de récolte estivale pour lequel l'ouverture de la pâte n'apparaissait pas malgré l'enrobage du fromage d'une coque imperméable aux gaz avant l'affinage, on a procédé à des modification d'ordre technologique et microbiologique.
1a. On a modifié le barème de pasteurisation entre 63°C et 90°C.
1b. On a augmenté le taux de présure au 1/10000ème à 45 ml pour 1001 de lait.
1c. On a accentué le délactosage en lavant les grains de caillé à plusieurs reprises après soutirage du sérum ou au contraire, on a supprimé le lavage pour diminuer le délactosage.
1d. On a fait varier la température de pressage de 20°C à 32°C.
1e. On a augmenté le taux de germes propioniques à 2 . 10⁶ germes (cellules revivifiables)/ml.
1f. On a varié la nature des germes propioniques au taux d'ensemencement de l'exemple 1 en utilisant des germes de différentes provenances ou des souches précultivées au laboratoire.
1g. On a procédé à la maturation du lait cru afin de multiplier les ferments sauvages dans le lait de départ.
1h. On a ensemencé le lait avec des levures à un taux de 10⁵ cellules revivifiables/ml.
1i. On a ensemencé le lait avec un mélange de levures et de bactéries de l'espèce Leuconostoc citrovorum au taux de 10⁵ à 10⁶ cellules revivifiables/ml.
1j. On a ensemencé le lait avec des bactéries de l'espèce Lactobacillus helveticus à raison de 1%.

Ces différentes approches n'ont pas permis de réaliser l'ouverture de la pâte à l'exception de l'essai 1i qui présentait une faible ouverture, jugée insuffisante.
2. Les laits d'hiver sont caractérisés par la présence de germes butyriques. Selon leur taux, ces germes peuvent aider à l'ouverture des fromages ou au contraire provoquer des accidents de gonflement et de goût et une ouverture anarchique de la pâte par une production massive de H₂ et d'H₂S. On a tenté de provoquer l'ouverture de la pâte en utilisant des laits de récolte hivernale.
2a. Afin de bloquer le gaz dans le produit, on a enrobé les fromages d'un film thermoformé en polychlorure de vinyle (PVC)/polypropylène (PP) d'épaisseur 400 µm sur 90% de leur surface. Un bouchon de cire occupait les 10% de la surface restante et servait de soupape en cas d'augmentation de volume.
   On a comparé les fromages ainsi traités avec des fromages témoins sans enrobage. Après 25 jours d'affinage, les fromages témoins restaient aveugles (sans ouverture) tandis que les fromages enrobés étaient ouverts mais très déformés.
2b. On a augmenté le taux de germes propioniques à l'ensemencement à la valeur de 10⁶ cellules revivifiables/ml, toutefois sans enrober les fromages. Cette mesure n'a pas assuré l'ouverture recherchée. Cela montre qu'il n'y a pas de correlation entre ces germes et la formation de l'ouverture, puisqu'une forte population n'y suffit pas. Cependant, en l'absence de lactobacilles mais avec un enrobage, l'ouverture ne peut se former que dans les fromages ayant une population importante de bactéries proprioniques et/ou butyriques.

### Exemple 5

En utilisant le procédé de l'exemple 1, on fabrique des fromages de 32 g en les couvrant entièrement d'une couche de cire (paraffine), puis en les enrobant d'un film plastique (FOODPLAST®).

La pâte présente une ouverture régulière au bout de 28 jours.

### Exemple 6

On procède comme à l'exemple 5, sauf que l'on ne réalise ni paraffinage, ni enrobage, mais que l'on conduit l'affinage dans une enceinte où règne une surpression de 25 mb de gaz carbonique par rapport à la pression atmosphérique et une humidité relative de 90%.

La pâte présente une ouverture régulière au bout de 20 jours.

## Revendications

1. Procédé de fabrication de fromages à pâte pressée à ouverture, ayant des caractéristiques organoleptiques et d'ouverture de la pâte du type de celles de l'Emmental et de dimensions moyennes à faibles, dans lequel on pasteurise du lait standardisé en matière grasse lactique, on l'ensemence avec des ferments lactiques et de la présure pour produire un caillé et du sérum, on découpe le caillé en grains, on soutire une partie du sérum et on lave les grains de caillé, on les chauffe, on les met dans des moules, et on les presse dans les moules puis on démoule les fromages, on les sale et on les affine, caractérisé par le fait que l'on ajoute au lait avant l'emprésurage 5.10⁴ à 10⁷ lactobacilles de l'espèce Lactobacillus fermentum par ml de lait pour réaliser l'ouverture de la pâte.

2. Procédé selon la revendication 1, caractérisé par le fait que les souches de lactobacilles sont Lactobacillus fermentum C.N.C.M . I-459, C.N.C.M I-460 et C.N.C.M. I-461.

3. Procédé selon l'une des revendications 1 et 2, caractérisé par le fait que l'on ajoute en outre avant l'emprésurage 5.10⁵ à 2.10⁴ germes propioniques revivifiables par ml de lait.

4. Procédé selon l'une des revendications 1 à 3, caractérisé par le fait que l'on enrobe le fromage d'un film plastique essentiellement imperméable aux gaz avant l'affinage.

5. Procédé selon l'une des revendications 1 à 3, caractérisé par le fait qu'avant l'affinage, on recouvre le fromage d'une couche de paraffine et on l'enrobe d'un film plastique essentiellement imperméable aux gaz.

6. Procédé selon l'une des revendications 1 à 3, caractérisé par le fait que l'on effectue l'affinage des fromages dans une enceinte où règne une surpression d'air ou de gaz carbonique par rapport à la pression atmosphérique.

7. Fromages obtenus par la mise en oeuvre du procédé selon l'une des revendications 1 à 6.

8. Fromages obtenus par la mise en oeuvre du procédé selon la revendication 4, caractérisés par le fait qu'ils se présentent sous forme de meules de diamètre inférieur à 110 mm et dont le poids est inférieur à 500 g.

9. Fromages obtenus par la mise en oeuvre du procédé selon la revendication 5, caractérisés par le fait qu'ils ont un poids inférieur à 40 g.

10. Fromages obtenus par la mise en oeuvre du procédé selon la revendication 6, caractérisés par le fait qu'ils se présentent sous forme de meules de diamètre inférieur à 110 mm et dont le poids est inférieur à 500 g.

## Claims

1. A process for making pressed curd opened-body cheeses, which have organoleptic and body opening characteristics similar to those of Emmenthal and are of average to small dimensions, in which milk standardized in milk fats is pasteurized, seeded with lactic ferments and rennet to produce a curd and serum, the curd is cut into grains, part of the serum is removed and the curd grains are washed, heated, placed in moulds and pressed in the moulds, after which the cheeses are removed from the moulds, salted and ripened, characterized in that 5.10⁴ to 10⁷ lactobacilli of the species Lactobacillus fermentum per mi milk are added to the milk before renneting to produce opening of the body.

2. A process as claimed in claim 1, characterized in that the strains of lactobacilli are Lactobacillus fermentum C.N.C.M. I-459, C.N.C.M. I-460 and C.N.C.M. I-461.

3. A process as claimed in claim 1 or 2, characterized in that 5.10⁵ to 2.10⁴ revitalizable propionic germs per ml milk are also added before renneting.

4. A process as claimed in any of claims 1 to 3, characterized in that the cheese is coated with a plastics film substantially impermeable to gases before ripening.

5. A process as claimed in any of claims 1 to 3, characterized in that, before ripening, the cheese is covered with a layer of paraffin and coated with a plastics film substantially impermeable to gases.

6. A process as claimed in any of claims 1 to 3, characterized in that the cheeses are ripened in a chamber in which an excess pressure of air or carbon dioxide in relation to atmospheric pressure prevails.

7. Cheeses obtained by the process claimed in any of claims 1 to 6.

8. Cheeses obtained by the process claimed in claim 4, characterized in that they are in the form of wheels smaller than 110 mm in diameter and weighing less than 500 g.

9. Cheeses obtained by the process claimed in claim 5, characterized in that they weigh less than 40 g.

10. The cheeses obtained by the process claimed in claim 6, characterized in that they are in the form of wheels smaller than 110 mm in diameter and weighing less than 500 g.

## Patentansprüche

1. Verfahren zur Herstellung von Lochkäsen mit gepresster Masse, welcher Käse organoleptische Kennmerkmale und die charakteristischen Eigenschaften hinsichtlich der Löcher in der Masse aufweisen, welche nahe an jene eines Emmentalerkäses herankommen und von mittleren bis kleinen Abmessungen sind, bei welchem man hinsichtlich ihres Gehaltes an Milchfett standardisierte Milch pasteurisiert, dieselbe mit Milchsäuregärungserregern und mit Labferment zur Erzeugung eines Labgels und von Molke beimpft, das Labgel zu Bruchkörnern zerschneidet, einen Teil der Molke abzieht, und die Labgelkörner wäscht, erhitzt, in Formen gibt, in den Formen preßt, dann die Käse entformt, dieselben einsalzt und reifen läßt, dadurch gekennzeichnet, daß man zur Ausbildung von Löchern in der Masse zu der Milch vor der Einlabung 5.10 bis 10 Milchsäurebakterien von der Spezies Lactobacillus fermentum je ml Milch hinzufügt.

2. Verfahren nach Anspruch 1, dadurch gekennzeichnet, daß die verwendeten Stämme von Milchsäurebakterien Lactobacillus fermentum C.N.C.M.I-459, C.N.C.M.I-460 und C.N.C.M.I-461 sind.

3. Verfahren nach Anspruch 1 oder 2, dadurch gekennzeichnet, daß man ausserdem vor der Einlabung 5.10 bis 2.10 lebensfähige Propionibakterien je ml Milch zusetzt.

4. Verfahren nach einem der Ansprüche 1 bis 3, dadurch gekennzeichnet, daß man den Käse vor dessen Reifung mit einem im wesentlichen für Gase undurchlässigen Kunststoffilm umhüllt.

5. Verfahren nach einem der Ansprüche 1 bis 3, dadurch gekennzeichnet, daß man den Käse vor dessen Reifung mit einer Paraffinschicht bedeckt und mit einem im wesentlichen für Gase undurchlässigen Kunststoffilm umhüllt.

6. Verfahren nach einem der Ansprüche 1 bis 3, dadurch gekennzeichnet, daß man die Reifung der Käse in einem Behälter durchführt, in welchem ein Überdruck an Luft oder Kohlendioxid in Bezug auf den Atmosphärendruck herrscht.

7. Käse, welche durch Ausführung des Verfahrens nach einem der Ansprüche 1 bis 6 erhalten worden sind.

8. Käse, welche durch Ausführung des Verfahrens nach Anspruch 4 erhalten worden sind, dadurch gekennzeichnet, daß sie die Form von Käselaiben mit einem Durchmesser von unter 110 mm und einem Gewicht von unter 500 g aufweisen.

9. Käse, welche durch Ausführung des Verfahrens nach Anspruch 5 erhalten worden sind, dadurch gekennzeichnet, daß sie ein Gewicht von unter 40 g aufweisen.

10. Käse, welche durch Ausführung des Verfahrens nach Anspruch 6 erhalten worden sind, dadurch gekennzeichnet, daß sie die Form von Käselaiben mit einem Durchmesser von unter ll0 mm und einem Gewicht von unter 500 g aufweisen.
